# EUROPEAN PATENT SPECIFICATION

(11) **EP 3 495 868 B1**
(45) Date of publication and mention of the grant of the patent: **08.03.2023**
(21) Application number: 18206160.6
(22) Date of filing: 14.11.2018
(51) Int. Cl.: G02B 27/00, G02B 5/09, G02B 27/01, G02B 27/14

(54) **HEAD UP DISPLAY (HUD) SYSTEM AND OPTICAL ELEMENT FOR HUD**
HEAD-UP-ANZEIGE, HEAD-UP ANZEIGESYSTEM UND OPTISCHES ELEMENT FÜR EINE HEAD-UP-ANZEIGE
SYSTÈME D'AFFICHAGE TÊTE HAUTE (HUD) ET ÉLÉMENT OPTIQUE POUR AFFICHAGE TÊTE HAUTE

(30) Priority: 24.11.2017 KR 20170158610
(43) Date of publication of application: 12.06.2019
(73) Proprietor: Samsung Electronics Co., Ltd., Gyeonggi-do 16677 (KR)
(72) Inventor: LEE, Jinho, 16678 Gyeonggi-do (KR); MALINOVSKAYA, Elena, 16678 Gyeonggi-do (KR); YANUSIK, Igor, 16678 Gyeonggi-do (KR); MOROZOV, Alexander, 16678 Gyeonggi-do (KR); NAM, Dong Kyung, 16678 Gyeonggi-do (KR); CHOI, Yoonsun, 16678 Gyeonggi-do (KR)
(74) Representative: Grünecker Patent- und Rechtsanwälte PartG mbB

(56) References cited:
- US-A1- 2016 327 792
- US-B1- 6 236 511
- US-B1- 7 656 585

## Description

### BACKGROUND

### 1. Field

Methods and apparatuses consistent with exemplary embodiments relate to a head up display (HUD) system and an optical element for an HUD.

### 2. Description of the Related Art

A head up display (HUD) system generates a virtual image in front of a driver and displays information in the virtual image, thereby providing the user with a variety of information. The information provided to the driver includes, for example, navigation information and dashboard information such as a vehicle speed, a fuel level, and an engine revolution per minute (RPM). Based on the HUD, a driver may more easily recognize the information displayed in front without turning his or her gaze during driving, and thus, driving safety may improve. In addition to the navigation information and the dashboard information, the HUD system may also provide the user with, for example, a lane indicator, a construction indicator, an accident indicator, a pedestrian detection indicator using augmented reality (AR). Documents US20160327792, US6236511, US7656585 disclose HUD system with an optical element including a Fresnel pattern.

### SUMMARY

One or more exemplary embodiments may address at least the above problems and/or disadvantages and other disadvantages not described above. Also, the exemplary embodiments are not required to overcome the disadvantages described above, and an exemplary embodiment may not overcome any of the problems described above. The optical element according to the invention is defined by the subject-matter of claims 1 and the HUD system according to the invention is defined by claim 8. Further features according to the invention are defined by the dependent claims.

According to an aspect of an exemplary embodiment, there is provided an optical element for a head up display (HUD), the optical element including a Fresnel pattern layer configured to enlarge a virtual image of an HUD image, a multiband coating layer formed on the Fresnel pattern layer, the multiband coating layer configured to receive light of multiple wavelength bands from a light source, and transmit a portion of the light of the multiple wavelength bands based on a transmittance set with respect to each of the multiple wavelength bands, and an immersion layer formed on the multiband coating layer, a refractive index of the immersion layer being equal to a refractive index of the Fresnel pattern layer.

The multiple wavelength bands may include a wavelength band corresponding to a red light, a wavelength band corresponding to a green light, and a wavelength band corresponding to a blue light.

The transmittance may be set with respect to each of the multiple wavelength bands such that a transmittance with respect to a white light is maintained at a predetermined level.

The transmittance may be set to maintain a visibility of the optical element with respect to a windshield at a predetermined level.

The transmittance may be set to be lower than a predetermined transmittance when a bandwidth of each wavelength band of the multiple wavelength bands is narrower than a predetermined bandwidth.

The transmittance may be set to a first transmittance when the light source is a light emitting diode (LED), and set to a second transmittance when the light source is a laser, the first transmittance being higher than the second transmittance.

The multiband coating layer may be formed on at least one inclined surface of the Fresnel pattern layer.

The Fresnel pattern layer may include at least one section of a Fresnel lens including at least one inclined surface based on an angle at which the HUD image is projected to a user.

The Fresnel lens comprises a first section including an inclined surface of a first direction, a second section including an inclined surface of a second direction, and a third section adjacent to a central axis, and wherein the Fresnel pattern layer comprises the first section or the second section.

The optical element may be inserted into a windshield, or attached to the windshield in a form of a film.

According to an aspect of an exemplary embodiment, there is provided a head up display (HUD) system, including a light source configured to emit light of multiple wavelength bands for an HUD image, a first optical element configured to adjust the light of the multiple wavelength bands, and a second optical element including a first layer configured to enlarge a virtual image of the HUD image, a second layer configured to transmit a portion of the light of the multiple wavelength bands based on a transmittance set with respect to the multiple wavelength bands, and a third layer having a same refractive index as the first layer.

The multiple wavelength bands may include a wavelength band corresponding to a red light, a wavelength band corresponding to a green light, and a wavelength band corresponding to a blue light.

The first optical element may include at least one mirror, or at least one projection optical element.

The transmittance may be set with respect to each of the multiple wavelength bands such that a transmittance with respect to a white light is maintained at a predetermined level.

The transmittance may be set to a first transmittance when the light source is a light emitting diode (LED), and set to a second transmittance when the light source is to a laser, and wherein the first transmittance is higher than the second transmittance.

The second layer may be formed on an inclined surface of the first layer.

The first layer may include at least one section of a Fresnel lens including at least one inclined surface based on an angle at which the HUD image is projected to a user.

The HUD system may further include a display panel configured to display the HUD image, and a three-dimensional (3D) optical layer configured to convert the HUD image to a 3D image.

According to an aspect of an exemplary embodiment, there is provided a head up display (HUD) system, including a light source configured to provide light of first multiple wavelength bands for an HUD image, a first optical element configured to reflect the light of the first multiple wavelength bands provided by the light source, and transmit light of second multiple wavelength bands provided from an external light source outside of a vehicle, and a second optical element including a first layer configured to enlarge a virtual image of the HUD image, a second layer configured to reflect the light of the first multiple wavelength bands reflected by the first optical element and light of the first multiple wavelength bands provided from the external light source outside of the vehicle, and transmit the light of the second multiple wavelength bands provided from the external light source outside of the vehicle; and a third layer, a refractive index of the third layer being equal to a refractive index of the first layer.

The first multiple wavelength bands may include a portion of a first wavelength band corresponding to a red light, a portion of a second wavelength band corresponding to a green light, and a portion of a third wavelength band corresponding to a blue light, and the second multiple wavelength bands may include at least a portion of a remainder excluding the first multiple wavelength bands from the first wavelength band, at least a portion of a remainder excluding the first multiple wavelength bands from the second wavelength band, and at least a portion of a remainder excluding the first multiple wavelength bands from the third wavelength band.

According to an aspect of an exemplary embodiment, there is provided a head up display (HUD) system, including a light source configured to emit light of first multiple wavelength bands for an HUD image, a first optical element configured to reflect the light of the first multiple wavelength bands, and a second optical element configured to reflect light of the first multiple wavelength bands reflected from the first optical element, the second optical element including a Fresnel pattern layer including at least one Fresnel lens with inclined surfaces, a multiband coating layer formed on the inclined surfaces of the Fresnel lens, the multiband coating layer configured to reflect light of the first multiple wavelength bands based on a reflectance set with respect to each of the first multiple wavelength bands, and an immersion layer formed on the multiband coating layer, a refractive index of the immersion layer being equal to a refractive index of the Fresnel pattern layer.

The second optical element may be configured to reflect light of the first multiple wavelength bands provided from an external light source outside of a vehicle based on the set reflectance, and transmit light of a second multiple wavelength bands provided from the external light source.

The first multiple wavelength bands may include a portion of a first wavelength band corresponding to a red light, a portion of a second wavelength band corresponding to a green light, and a portion of a third wavelength band corresponding to a blue light, and the second multiple wavelength bands may include at least a portion of a remainder excluding the first multiple wavelength bands from the first wavelength band, at least a portion of a remainder excluding the first multiple wavelength bands from the second wavelength band, and at least a portion of a remainder excluding the first multiple wavelength bands from the third wavelength band.

The inclined surfaces may be inclined at an angle based on an angle at which the HUD image is projected to a user.

The second optical element may be inserted into a windshield, and the reflectance may be set based on a reflectance of the first multiple wavelength bands of the windshield to maintain a visibility of the second optical element at a predetermined level.

The size of a pitch of the Fresnel lens may be less than an eye power of a user.

### BRIEF DESCRIPTION OF THE DRAWINGS

The above and/or other aspects will be more apparent by describing exemplary embodiments with reference to the accompanying drawings, in which:
FIG. 1 illustrates a head up display (HUD) system according to an exemplary embodiment;
FIG. 2 illustrates an optical element for an HUD according to an exemplary embodiment;
FIG. 3 is a graph illustrating a transmitting characteristic of a multiband coating layer according to an exemplary embodiment;
FIG. 4 is a graph illustrating a wavelength band of a light emitting diode (LED) type light source according to an exemplary embodiment;
FIG. 5 illustrates transmitting and reflecting characteristics of an optical element for an HUD according to an exemplary embodiment;
FIG. 6 is a graph illustrating a visible light transmittance of a windshield according to an exemplary embodiment;
FIG. 7 is a graph illustrating a visible light transmittance of an optical element for an HUD according to an exemplary embodiment;
FIG. 8 illustrates transmitting and reflecting characteristics of an optical element for an HUD according to an exemplary embodiment;
FIG. 9 is a graph illustrating a visible light transmittance of an optical element for an HUD according to an exemplary embodiment;
FIG. 10 illustrates operating sections of a Fresnel lens according to an exemplary embodiment;
FIG. 11A and FIG. 11B illustrate propagation paths of light with respect to operating sections of a Fresnel lens according to an exemplary embodiment;
FIG. 12 illustrates a resolving power of an eye according to an exemplary embodiment;
FIG. 13 illustrates a structure and a dimension of a Fresnel pattern according to an exemplary embodiment;
FIG. 14 illustrates a process of manufacturing an optical element for an HUD according to an exemplary embodiment;
FIG. 15 illustrates an HUD system for blocking external lights according to an exemplary embodiment;
FIG. 16 is a graph illustrating a transmitting characteristic of a multiband coating layer for blocking external light according to an exemplary embodiment;
FIG. 17 illustrates a display device and mirrors according to an exemplary embodiment;
FIG. 18 illustrates an HUD system including a projection optical element according to an exemplary embodiment;
FIG. 19 illustrates an HUD system including a three-dimensional (3D) optical layer according to an exemplary embodiment;
FIG. 20 illustrates an HUD system for eyeglasses according to an exemplary embodiment; and
FIG. 21 illustrates paths of light related to an HUD system for eyeglasses according to an exemplary embodiment.

### DETAILED DESCRIPTION

Reference will now be made in detail to exemplary embodiments, examples of which are illustrated in the accompanying drawings, wherein like reference numerals refer to the like elements throughout.

The following structural or functional descriptions are exemplary to merely describe the exemplary embodiments, and the scope of the exemplary embodiments is not limited to the descriptions provided in the present specification. Various changes and modifications can be made thereto by those of ordinary skill in the art.

Although terms of "first" or "second" are used to explain various components, the components are not limited to the terms. These terms should be used only to distinguish one component from another component. For example, a "first" component may be referred to as a "second" component, or similarly, and the "second" component may be referred to as the "first" component.

As used herein, the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof. The term of "and / or" includes a plurality of combinations of relevant items or any one item among a plurality of relevant items.

Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Unless otherwise defined herein, all terms used herein including technical or scientific terms have the same meanings as those generally understood by one of ordinary skill in the art.

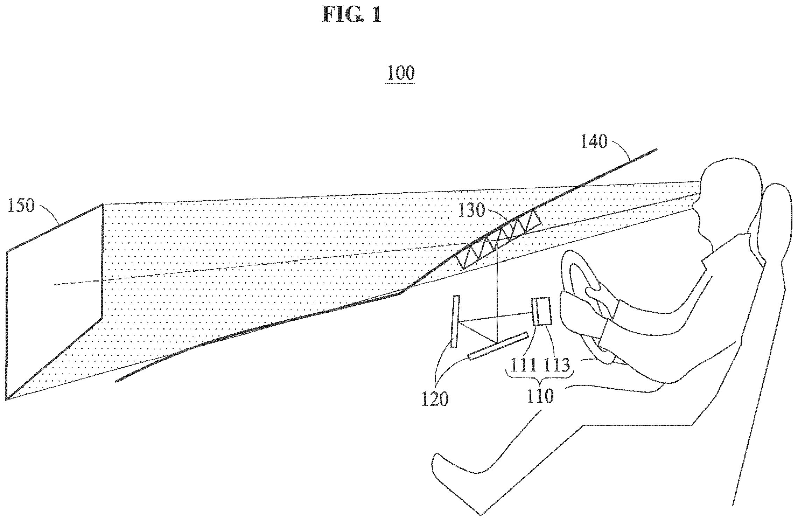

FIG. 1 illustrates a head up display (HUD) system according to an exemplary embodiment. Referring to FIG. 1, an HUD system 100 may include a display device 110, a first optical element 120, and a second optical element 130.

The display device 110 may include a display panel 111 and a light source 113. The display panel 111 may display an HUD image, and the light source 113 may provide light of multiple wavelength bands for the HUD image to the display panel 111. For example, the multiple wavelength bands may include a wavelength band indicating a red light, a wavelength band indicating a green light, and a wavelength band indicating a blue light. Hereinafter, the multiple wavelength bands may refer to wavelength bands of light provided by the light source 113, or refer to wavelength bands for which a transmittance of the second optical element 130 is set in relation to the wavelength bands of the lights provided by the light source 113. The light source 113 may be a light emitting diode (LED) type or a laser type. However, the wavelength bands belonging to the multiple wavelength bands and the type of the light source 113 are not limited thereto. In addition to the above example, the light source 113 may provide other wavelength bands, for example, wavelengths of cyan, magenta, and yellow light sources, and light source may be another type. Referring to FIG. 1, according to an exemplary embodiment, the display panel 111 and the light source 113 of the display device 110 may be implemented as separate layers. However, exemplary embodiments are not limited thereto, and the display panel 111 and the light source 113 of the display device 110 may be implemented as a single layer, for example, as an LED matrix.

The light of the multiple wavelength bands provided by the light source 113 may be projected to the first optical element 120 through the display panel 111, and the first optical element 120 may adjust the light of the multiple wavelength bands. Adjusting light of the multiple wavelength bands may include optically adjusting the light of the multiple wavelength bands. For example, the first optical element 120 may include at least one mirror, at least one projection optical element, or a combination thereof. The at least one mirror may include at least one aspheric mirror. When the first optical element 120 includes at least one mirror, the first optical element 120 may optically adjust directions of the light of the multiple wavelength bands such that the light of the multiple wavelength bands may propagate toward the second optical element 130. When the first optical element 120 includes at least one projection optical element, the first optical element 120 may optically adjust the directions of the light of the multiple wavelength bands such that a virtual image may be enlarged on a virtual image plane 150.

The second optical element 130 may receive the light of the multiple wavelength bands from the light source 113, transmit a portion of the light of the multiple wavelength bands based on a transmittance set with respect to each of the multiple wavelength bands, and reflect a remaining portion of the light. Hereinafter, the examples are described in an aspect of light transmission or light reflection. For example, a transmittance of 80% may be understood as being the same as a reflectance of 20%. A user may view the virtual image of the HUD image on the virtual image plane 150 through the light reflected by the second optical element 130.

As described above, the HUD system 100 may generate the virtual image on the virtual image plane 150 in front of a driver and display information through projection. When a size of the displayed image is not sufficiently large, or a field of view (FOV) is not sufficiently wide, it may be difficult to represent information related to an object or a background in front of a vehicle using augmented reality (AR). To provide AR-level information through an HUD, the virtual image plane 150 on which the virtual image of the HUD image is viewed may need to be implemented with a wide FOV, where a horizontal FOV times a vertical FOV is equal to or greater than 10 times 5 degrees. The display device 110 and the first optical element 120 may be mounted in a dashboard of the vehicle. Due to a limited space in the dashboard, there may be a limitation in implementing a sufficiently wide FOV by increasing the sizes of the display device 110 and the first optical element 120.

The second optical element 130 may be inserted into a windshield 140, or attached to the windshield 140 to enlarge the virtual image of the HUD image. For example, the second optical element 130 may be inserted between two sheets of glass constituting the windshield 140, or be attached to an inner surface of the windshield 140 in a form of film. The second optical element 130 having a relatively small volume may enlarge the virtual image on the virtual image plane 150. Thus, the second optical element 130 may reduce volumes of the display device 110, the first optical element 120, and a space of an optical system including the display device 110 and the first optical element 120 implementing a wide FOV.

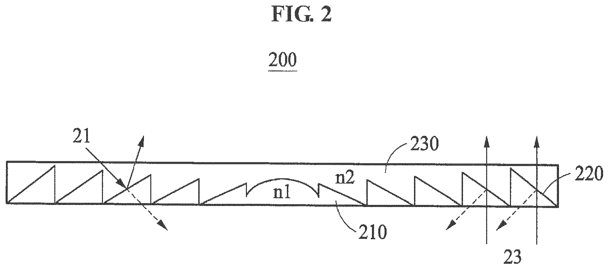

FIG. 2 illustrates an optical element for an HUD according to an exemplary embodiment. An optical element 200 may include a Fresnel pattern layer 210, a multiband coating layer 220, and an immersion layer 230. The optical element 200 may correspond to the second optical element 130 of FIG. 1.

The Fresnel pattern layer 210 may include at least a portion of a Fresnel lens, and enlarge a virtual image of an HUD image. The Fresnel lens is obtained by dividing a general lens into annular bands and compressing the lens, and may enlarge an image with a relatively thin thickness, when compared to a general lens that is not a Fresnel lens. The Fresnel lens may include a first section including an inclined surface of a first direction, a second section including an inclined surface of a second direction, and a third section around a central axis. The first section and the second section may also be referred to as off-axis sections. FIG. 2 illustrates an exemplary embodiment of the Fresnel pattern layer 210 including all of the first section, the second section, and the third section of the Fresnel lens. However, exemplary embodiment are not limited thereto, and in an example, the Fresnel pattern layer 210 may include the off-axis sections of the Fresnel lens. For example, the Fresnel pattern layer 210 may include the first section or the second section. When an off-axis section is used as the Fresnel pattern layer 210, light corresponding to the HUD image may be more efficiently provided to a user.

Light 21 may be light of multiple wavelength bands provided by a light source, and correspond to the HUD image. The multiband coating layer 220 may receive the light 21 of the multiple wavelength bands, transmit a portion of the light 21 based on a transmittance set with respect to the multiple wavelength bands, and reflect a remaining portion of the light 21. Based on the transmittance of the multiband coating layer 220, a portion of the light 21 may be reflected by the multiband coating layer 220 and provided to the user, and a remaining portion of the light 21 may be transmitted outside of a vehicle. The transmittance of the multiband coating layer 220 may be set based on wavelength bands of the light provided by the light source. For example, the multiband coating layer 220 may be set to reflect the light of the wavelength bands provided by the light source more than light of remaining wavelength bands not provided by the light source. In an example, the transmittance of the multiband coating layer 220 may be set to have a first value with respect to the wavelength bands provided by the light source, and set to have a second value with respect to the remaining wavelength bands, where the first value may be less than the second value.

External light 23 may be provided from outside of the vehicle. The external light 23 may include sunlight, streetlights, and reflected light. According to an exemplary embodiment, the external light 23 may be sunlight. In this example, the external light 23 may include light of wavelength bands not provided by the light source such as an ultraviolet band and the entire visible light band including the wavelength bands provided by the light source. Based on the transmittance of the multiband coating layer 220, a portion of the external light 23 may be reflected toward the outside of the vehicle by the multiband coating layer 220, and a remaining portion of the external light 23 may be transmitted inside of the vehicle. Wavelength bands and a reflectance set to reflect the external light 23 may correspond to wavelength bands and a reflectance of the light 21 provided by the light source.

In an example, the transmittance of the multiband coating layer 220 may be set based on a visibility of the optical element 200 with respect to a windshield. The visibility of the optical element 200 with respect to the windshield may indicate how distinctively the user views the optical element 200 from the windshield. If the optical element 200 is viewed distinctively on the windshield, the user may have an unnatural view in front of the user. In an example, to eliminate or reduce the unnatural view, the transmittance of the multiband coating layer 220 may be set such that the visibility of the optical element 200 with respect to the windshield may decrease. For example, the first value and the second value may be set such that the HUD image may be provided to the user with a required brightness and the visibility of the optical element 200 with respect to the windshield may be minimized or reduced. In another example, the transmittance of the multiband coating layer 220 may be set with respect to the multiple wavelength bands such that the transmittance with respect to a white light may be maintained at a predetermined level. The transmittance of the multiband coating layer 220 with respect to the white light may be set to correspond to a transmittance of the windshield with respect to the white light.

The multiband coating layer 220 may be formed on the Fresnel pattern layer 210. The Fresnel pattern layer 210 may include an inclined surface corresponding to a curved surface of the Fresnel lens and a vertical surface. In an example, the multiband coating layer 220 may be formed on the inclined surface of the Fresnel pattern layer 210. When the multiband coating layer 220 is formed on the inclined surface of the Fresnel pattern layer 210, lights corresponding to the HUD image may be more efficiently provided to the user. When the multiband coating layer 220 is formed on the inclined surface of the Fresnel pattern layer 210, an inflow of unnecessary external lights may also be prevented or reduced.

The immersion layer 230 may have the same refractive index as the Fresnel pattern layer 210. The immersion layer 230 may be formed on the multiband coating layer 220. For example, a refractive index n1 of the Fresnel pattern layer 210 may be equal to a refractive index n2 of the immersion layer 230. When the optical element 200 includes the immersion layer 230 having the same refractive index as the Fresnel pattern layer 210, a distortion of an object viewed through the optical element 200 may be prevented or reduced.

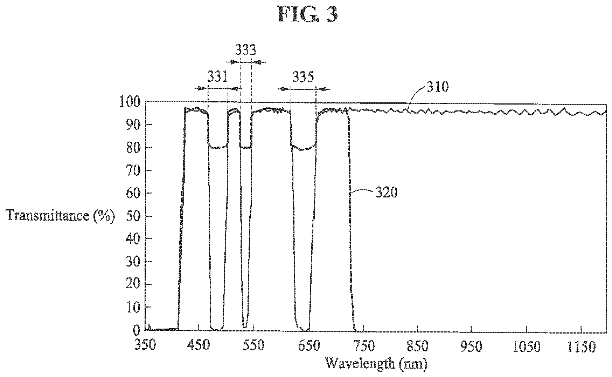

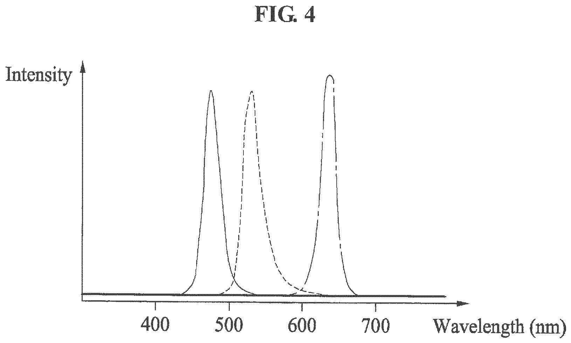

FIG. 3 is a graph illustrating a transmitting characteristic of a multiband coating layer according to an exemplary embodiment, and FIG. 4 is a graph illustrating wavelength bands of an LED type light source according to an exemplary embodiment. Referring to FIG. 3, a wavelength band 335 indicating a red light, a wavelength band 333 indicating a green light, and a wavelength band 331 indicating a blue light are illustrated. Hereinafter, the wavelength bands 331, 333, and 335 will be also referred to as multiple wavelength bands. A solid line 310 indicates a transmitting characteristic of a multiband coating layer having a transmittance of 0% with respect to lights of the multiple wavelength bands, a transmittance of about 97% with respect to remaining wavelengths bands. A broken line 320 may indicate a transmitting characteristic of a multiband coating layer having a transmittance of about 80% with respect to the multiple wavelength bands and a transmittance of about 97% with respect to remaining visible light bands. A bandwidth of the multiple wavelength bands may be set to correspond to a bandwidth of light provided by a light source. The transmitting characteristics of FIG. 3 may correspond to an LED type light source.

Referring to FIG. 4, red, green, and blue bands are illustrated. Each band has a full width at half maximum (FWHM) of about 24 to 27 nanometers (nm). Thus, in a case in which the LED type light source is used as a backlight of a display device, the bandwidth of the multiple wavelength bands may be set to around 25 nm as shown in FIG. 3. That is, the bandwidth of the multiple wavelength bands may be set to correspond to the bandwidth of the light provided by the light source. In a case in which a light source having a narrower FWHM, for example, a laser light source, is used, the bandwidth of the wavelength bands 331, 333, and 335 may be set to be narrower to correspond to the corresponding FWHM. For example, the laser light source may have an FWHM of about 1 nm. When the bandwidth of each wavelength band of the multiple wavelength bands is relatively narrow, the transmittance with respect to the multiple wavelength bands may be set to be relatively low. Thus, a reflectance with respect to the multiple wavelength bands may increase, and a light efficiency of an HUD system may improve. For example, the transmittance with respect to the multiple wavelength bands may be set to a first transmittance with respect to a LED type, and set to a second transmittance with respect to a laser type, where the first transmittance may be higher than the second transmittance.

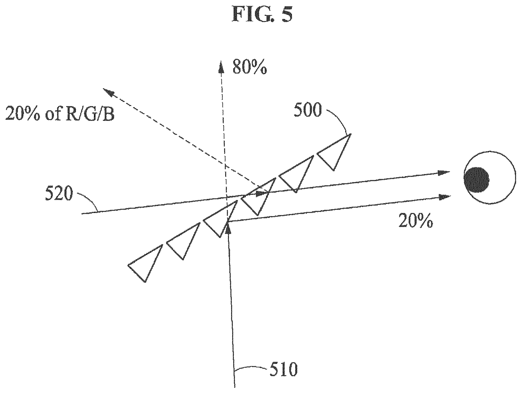

FIG. 5 illustrates transmitting and reflecting characteristics of an optical element for an HUD according to an exemplary embodiment. Referring to FIG. 5, an optical element 500 may transmit a portion of light 510 and light 520, and reflect a remaining portion thereof. The light 510 may be light of multiple wavelength bands provided by a light source, and may correspond to an HUD image. The light 520 may be light entering from an outside of a vehicle, and may correspond to external light such as sunlight.

As described with reference to FIG. 3, the optical element 500 may include a multiband coating layer having a transmittance of 80% with respect to the light of the multiple wavelength bands, for example, red, green, and blue bands. Thus, 20% of the light 510 may be reflected by the optical element 500 and provided to a user, and remaining 80% of the light 510 may pass through the optical element 500. In addition, among the light 520, 20% of light of the multiple wavelength bands may be reflected by the optical element 500, and 80% of the light of the multiple wavelength bands and light of remaining wavelength bands may pass through the optical element 500 and be provided to the user. In the example of FIG. 3, about 97% of the light of the remaining wavelength bands may pass through the optical element 500 and be provided to the user.

The user may view an object or a background outside the vehicle through the portion of the light 520 passing through the optical element 500, and may view a virtual image of the HUD image through the portion of the light 510 reflected by the optical element 500. Since most of the light 520 may be provided to the user, the user may view AR-level HUD information through a natural view in front of the user with respect to the optical element 500.

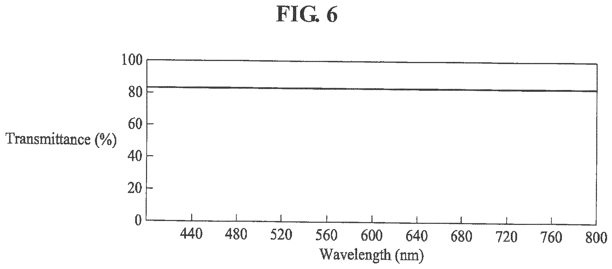

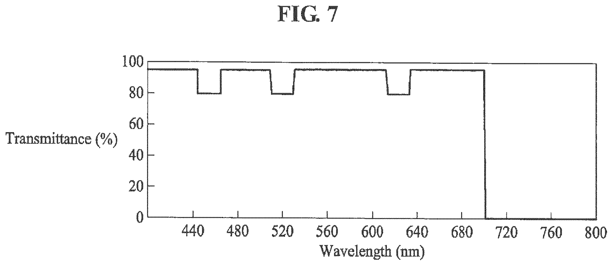

FIG. 6 is a graph illustrating a visible light transmittance of a windshield according to an exemplary embodiment, and FIG. 7 is a graph illustrating a visible light transmittance of an optical element for an HUD according to an exemplary embodiment. The graphs of FIGS. 6 and 7 may be obtained using an optical simulation tool.

Referring to FIG. 6, a windshield exhibits a visible light transmittance of about 84%. Here, the windshield may refer to a portion in which an optical element is not installed. The graph of FIG. 7 illustrates a visible light transmittance of an optical element under the conditions described with reference to FIGS. 3 and 4. The conditions may include using the LED type light source described with reference to FIG. 4, setting red, green, and blue wavelength bandwidths and a transmittance of a multiband coating layer to 25 nm and 80%, respectively, and setting a transmittance with respect to remaining visible light bands to 97%. Referring to FIG. 7, the optical element exhibits a visible light transmittance of about 84%. In detail, based on optical coating described with reference to FIG. 3, the visible light transmittance of the optical element and the visible light transmittance of a section of the windshield in which the optical element is not installed may be at equal levels. In this example, a visible light transmittance difference between a section in which the optical element is installed and a neighboring section thereof may be minimized or reduced, and thus, a visibility issue of the optical element may be reduced.

Meanwhile, in a case in which the LED type light source is used, the multiple wavelength bands may have ranges of 450 to 480 nm, 510 to 540 nm, and 620 to 650 nm, respectively. In general, a windshield has a transmittance of about 80 to 85% with respect to visible light. However, the transmittance of the windshield may vary depending on a design of the windshield. For example, when a color intermediate film is used between two sheets of glass constituting the windshield or a color film is attached to the windshield, the transmittance of the windshield may change. The transmittance of visible light of the optical element may be adjusted to correspond to the transmittance of visible light of the windshield.

To improve an efficiency of the HUD system, the transmittance with respect to the multiple wavelength bands may be lowered. That is, a reflectance with respect to the multiple wavelength bands may be increased. The efficiency of the HUD system may correspond to a brightness of a virtual image provided to a user in comparison to an intensity of light provided by a light source. When the transmittance with respect to the multiple wavelength bands is lowered while the LED type light source is maintained, the visibility of the optical element may increase. When a light source having a relatively narrow bandwidth, for example, a laser light source, is used, the visibility of the optical element may not increase although the transmittance with respect to the multiple wavelength bands is lowered. That is, the efficiency of the HUD system may improve without increasing the visibility of the optical element using a light source having a relatively narrow bandwidth.

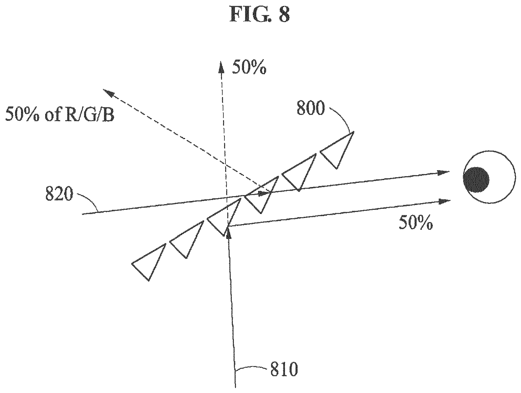

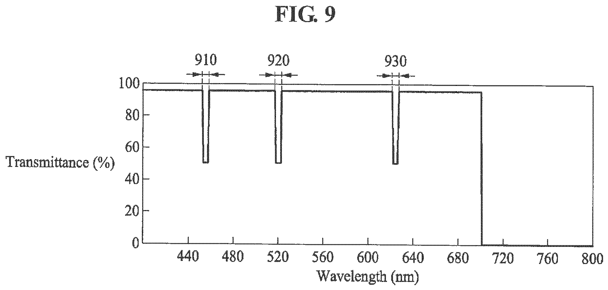

FIG. 8 illustrates transmitting and reflecting characteristics of an optical element for an HUD according to an exemplary embodiment, and FIG. 9 is a graph illustrating a result of interpreting a visible light transmittance of an optical element for an HUD according to an exemplary embodiment. FIGS. 8 and 9 illustrate an example of using a laser type light source.

Referring to FIG. 8, light 810 may be light of multiple wavelength bands provided by a light source, and correspond to an HUD image. Light 820 may be light provided from an external light source outside of a vehicle, and correspond to external light such as sunlight. Unlike the example of FIG. 5, an optical element 800 may include a multiband coating layer having a transmittance of 50% with respect to the light of the multiple wavelength bands, for example, red, green, and blue bands. Thus, 50% of the light 810 may be reflected by the optical element 800 and provided to a user, and remaining 50% of the light 810 may pass through the optical element 800. In addition, among the light 820, 50% of light of the multiple wavelength bands may be reflected by the optical element 800, and remaining 50% of the light of the multiple wavelength bands and light of remaining wavelength bands may pass through the optical element 800 and be provided to the user.

The graph of FIG. 9 shows a visible light transmittance of an optical element which is obtained using an optical simulation tool, under the conditions of using a laser type light source, setting red, green, and blue wavelength bandwidths and a transmittance of a multiband coating layer to 5 nm and 50%, respectively, and setting a transmittance with respect to remaining visible light bands to 97%. Wavelength bands 910 through 930 may be the multiple wavelength bands, and correspond to red, green, and blue, respectively.

A bandwidth of each wavelength band of the multiple wavelength bands of FIG. 9 may be narrower than a bandwidth of each wavelength band of the multiple wavelength bands of FIG. 4. When the bandwidth of each wavelength band of the multiple wavelength bands is relatively narrow, the transmittance with respect to the multiple wavelength bands may be set to be relatively low. That is, a reflectance with respect to the multiple wavelength bands may be set to be relatively high. To decrease the visibility of the optical element, the transmittance of the optical element with respect to visible light bands may need to be maintained at an appropriate level. When the bandwidth of each wavelength band of the multiple wavelength bands is relatively narrow, the transmittance of the optical element with respect to visible light bands may be maintained at an appropriate level although the reflectance with respect to each wavelength band of the multiple wavelength bands is increased. When the reflectance with respect to the multiple wavelength bands is relatively high, a relatively large portion of the light provided by the light source may be provided to the user, which may improve the light efficiency of the HUD system. For example, the light efficiency may be at a level of 20% when using an LED as a light source, and at a level of 50% when using laser as a light source.

Referring to FIG. 9, the optical element exhibits a visible light transmittance of about 84%. As described with reference to FIG. 6, the windshield has a visible light transmittance of about 84%. Thus, the visible light transmittance of the optical element and the visible light transmittance of the section of the windshield in which the optical element is not installed may be at equal levels. Thus, in a case in which a laser light source is used, a visibility issue related to the optical element may be minimized or reduced although the reflectance with respect to the multiple wavelength bands is increased.

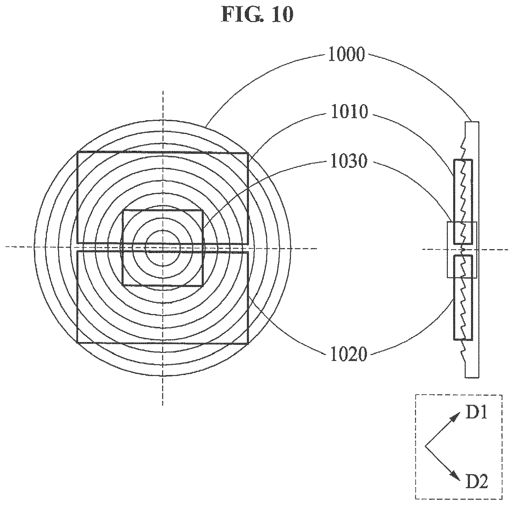

FIG. 10 illustrates operating sections of a Fresnel lens according to an exemplary embodiment. Referring to FIG. 10, a Fresnel lens 1000 may include a first section 1010 including an inclined surface of a first direction D1, a second section 1020 including an inclined surface of a second direction D2, and a third section 1030 around a central axis. The first section 1010 and the second section 1020 may also be referred to as off-axis sections.

To prevent or reduce light reflected by the windshield, or undesired noise light from entering a view of the user, the off-axis sections of the Fresnel lens 1000 may be used to enable light reflected by an optical coating surface of a Fresnel pattern and the light reflected by the windshield to propagate along different paths. Further, since the windshield is inclined about 30 to 40 degrees, an angle at which the light corresponding to the HUD image are projected may be considered in order to easily transmit the light in a direction toward the user. In an example, a Fresnel pattern layer may include the first section 1010 or the second section 1020 based on the angle at which the HUD image is projected to the user. For example, the second section 1020 may form an angle at which the light corresponding to the HUD image are provided to the user, and the first section 1010 may form an angle at which a relatively low portion of the light corresponding to the HUD image are provided to the user. However, when the first section 1010 is turned over, the first section 1010 may become the second section 1020. Thus, one of the first section 1010 and the second section 1020 may be selectively used.

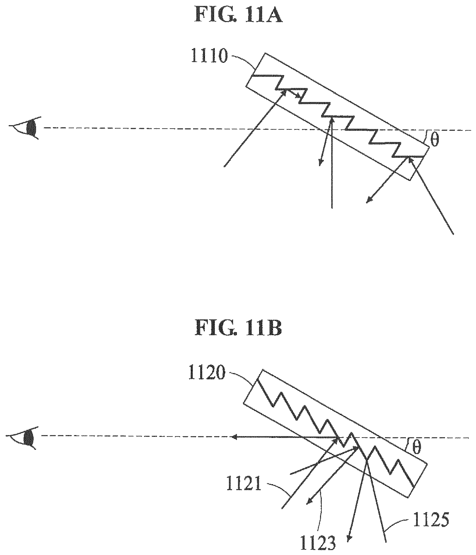

FIGS. 11A and 11B illustrate propagation paths of light with respect to operating sections of a Fresnel lens according to an exemplary embodiment. In an example, a Fresnel pattern layer may include a portion of sections of a Fresnel lens corresponding to an angle at which an HUD image is projected to a user. Referring to FIGS. 11A and 11B, an optical element 1110 may include a Fresnel pattern layer with an inclined surface formed in a first direction, and an optical element 1120 may include a Fresnel pattern layer with an inclined surface formed in a second direction. In a case in which θ denotes an angle between each of the optical elements 1110 and 1120 and a horizontal line, θ may be, for example, 30 to 40 degrees. A multiband coating layer may be formed on the Fresnel pattern layer of each of the optical elements 1110 and 1120. The multiband coating layer may reflect light entering each of the optical elements 1110 and 1120. In an example, the multiband coating layer may be formed on the inclined surface of a Fresnel pattern. Light entering an edge of the Fresnel lens may be likely to become noise light. Thus, by coating only the inclined surface of the Fresnel pattern, occurrence of light acting as noise to the user may be suppressed or reduced.

According to an exemplary embodiment, the multiband coating layer of the optical element 1110 may be formed on the inclined surface of the first direction. Referring to FIG. 11A, the multiband coating layer formed on the inclined surface of the first direction may reflect light corresponding to the HUD image toward the user with a relatively low probability. Thus, a light efficiency of an HUD system including the optical element 1110 may be relatively low. If the light corresponding to the HUD image reflected toward the user does not exist, the user may not view a virtual image of the HUD image.

According to an exemplary embodiment, the multiband coating layer of the optical element 1120 may be formed on the inclined surface of the second direction, for example, a direction opposite from the first direction of the optical element 1110. Referring to FIG. 11B, the multiband coating layer formed on the inclined surface of the second direction may reflect light 1121 corresponding to the HUD image toward the user with a relatively high probability. Thus, a light efficiency of an HUD system including the optical element 1120 may be relatively high, when compared to a case of including the optical element 1110. In addition, noise light 1123 provided from an external light source, such as sunlight, may be reflected on a surface of the windshield and removed downward, rather than propagating toward the user. Noise light 1125 provided from another position may also be removed downward by the multiband coating layer.

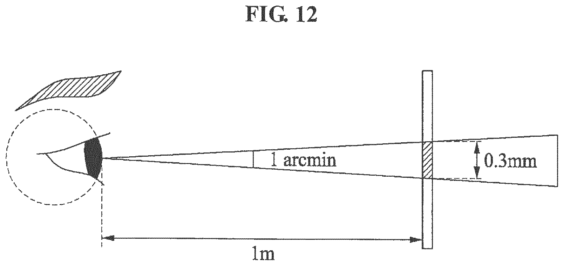

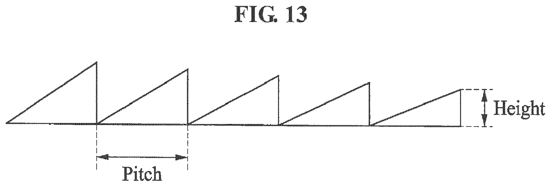

FIG. 12 illustrates a resolving power of an eye according to an exemplary embodiment, and FIG. 13 illustrates a structure and a dimension of a Fresnel pattern according to an exemplary embodiment. Referring to FIG. 12, a human eye has a resolving power of about 1 minute of arc (arcmin) or about 1/60 degrees. A user may not identify an object at a distance of 1 meter (m) from the user if a size of the object is less than or equal to 0.3 millimeters (mm). A Fresnel pattern needs to be manufactured in a size of below 1 arcmin such that the Fresnel pattern on the windshield is invisible to an eye. When an HUD system for a vehicle sets a distance between the windshield and the user within 750 mm, the Fresnel pattern may be manufactured to have a size of below 220 micrometers (µm). Referring to FIG. 13, a Fresnel pattern may be defined in a trigonal-prismatic form including a pitch and a height. In this example, the Fresnel pattern may be manufactured to have a size of below 220 µm with respect to the greater one of the pitch and the height.

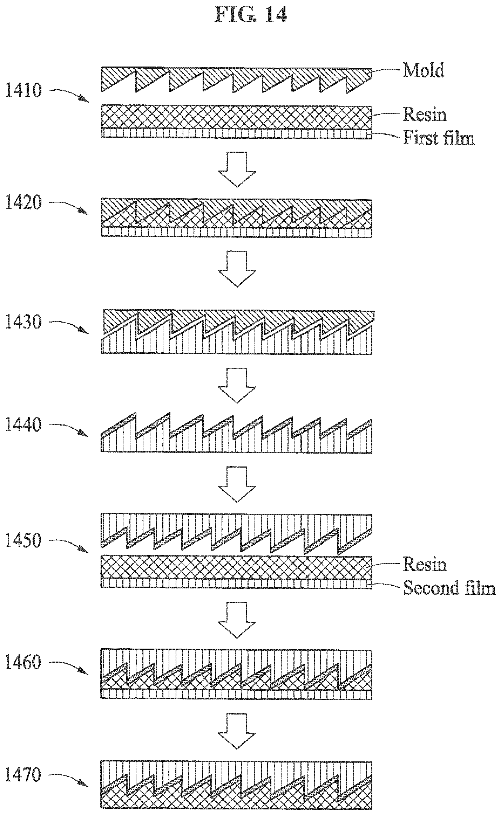

FIG. 14 illustrates a process of manufacturing an optical element for an HUD according to an exemplary embodiment. Referring to FIG. 14, in operation 1410, a mold with Fresnel pattern grooves and a first film coated with resin may be prepared. Here, the resin may be UV resin or thermosetting resin. In operation 1420, a manufacturing device may press the resin-coated first film with the mold, and harden the resin of the first film with the first film pressed by the mold. Here, the hardened resin may correspond to a Fresnel pattern layer. In operation 1430, the manufacturing apparatus may release the mold. In operation 1440, the manufacturing device may form a multiband coating layer on the hardened resin, for example, using vacuum deposition. The multiband coating layer may be formed on an inclined surface of the hardened resin.

In operation 1450, a second film coated with resin may be prepared. Here, the resin may be UV resin or thermosetting resin. The resin of operation 1410 and the resin of operation 1450 may have the same refractive index. In operation 1460, the manufacturing device may turn over the Fresnel pattern layer on which the multiband coating layer is formed, and harden the resin of the second film with the Fresnel pattern layer attached to the resin-coated second film. Here, the hardened resin of the second film may correspond to an immersion layer. In operation 1470, an optical element including the Fresnel pattern layer, the multiband coating layer, and the immersion layer may be obtained.

The optical element may be manufactured using roll-to-roll (R2R) processing. The optical element may also be manufactured through processes other than operations 1410 through 1470. For example, a Fresnel pattern may be manufactured using etching which is used for semiconductor production, and the immersion layer may be manufactured by reversely attaching two sheets of a Fresnel pattern film.

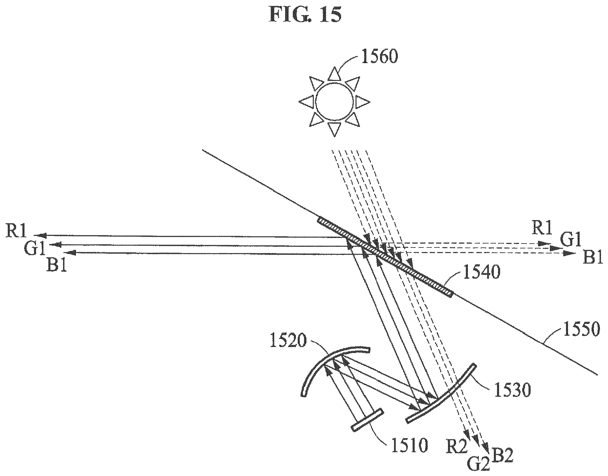

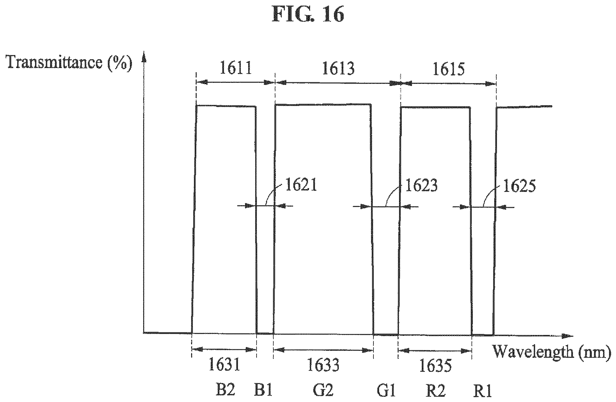

FIG. 15 illustrates an HUD system for blocking external light according to an exemplary embodiment. Referring to FIG. 15, a display device 1510 may output an HUD image. The display device 1510 may include a light source configured to provide light of first multiple wavelength bands, and a display panel configured to display the HUD image. In FIG. 15, the first multiple wavelength bands are indicated as R1, G1, and B1, and second multiple wavelength bands are indicated as R2, G2, and B2. R1, G1, and B1 may be a portion of a first wavelength band corresponding to red, a portion of a second wavelength band corresponding to green, and a portion of a third wavelength band corresponding to blue, respectively. R2, G2, and B2 may be at least a portion of a remainder excluding the first multiple wavelength bands from the first wavelength band, at least a portion of a remainder excluding the first multiple wavelength bands from the second wavelength band, and at least a portion of a remainder excluding the first multiple wavelength bands from the third wavelength band, respectively. The first multiple wavelength bands and the second multiple wavelength bands will be described further with reference to FIG. 16.

The light source may provide the light of the first multiple wavelength bands to first optical elements 1520 and 1530. The first optical elements 1520 and 1530 may each be an aspheric mirror or a reflection mirror. FIG. 15 illustrates two optical elements, for example, the first optical elements 1520 and 1530. However, the first optical elements 1520 and 1530 may be replaced with a single optical element based on an angle between the display device 1510 and the windshield. The first optical elements 1520 and 1530 may each include a multiband coating layer. The multiband coating layer may reflect the light of the first multiple wavelength bands, and transmit the light of the second multiple wavelength bands. In an example, the multiband coating layer may be applied only to the first optical element 1530.

Transmittances of the first optical elements 1520 and 1530 may be set with respect to the first multiple wavelength bands and the second multiple wavelength bands. For example, the first optical elements 1520 and 1530 may be set to reflect most of the light of the first multiple wavelength bands, and to transmit most of the light of the second multiple wavelength bands. In this example, the transmittance with respect to the first multiple wavelength bands may be set to be close to 0%, and the transmittance with respect to the second multiple wavelength bands may be set to be close to 100%.

A second optical element 1540 may include a Fresnel pattern layer configured to enlarge a virtual image of the HUD image, a multiband coating layer to which the same coating as the first optical elements 1520 and 1530 is applied, and an immersion layer having the same refractive index as the Fresnel pattern layer. The multiband coating layer of the second optical element 1540 may reflect the light of the first multiple wavelength bands reflected by the first optical elements 1520 and 1530 and light of the first multiple wavelength bands R1, G1, and B1 among light provided from an external light source an outside of a vehicle, and transmit light of the second multiple wavelength bands R2, G2, and B2 provided from an external light source outside of the vehicle.

The light of the first multiple wavelength bands provided from the light source may be provided to the user through the first optical elements 1520 and 1530 and the second optical element 1540, and the light of the second multiple wavelength bands may pass through the first optical elements 1520 and 1530 and the second optical element 1540. Thus, external light propagating to the display device 1510 may be blocked, and overheating of the display device 1510 and noise light such as flare on the display device 1510 may be prevented or reduced.

FIG. 16 is a graph illustrating a transmitting characteristic of a multiband coating layer for blocking external light according to an exemplary embodiment. Referring to FIG. 16, a first wavelength band 1615 corresponding to red, a second wavelength band 1613 corresponding to green, and a third wavelength band 1611 corresponding to blue are illustrated. In FIG. 16, first multiple wavelength bands are indicated as R1, G1, and B1. R1, G1, and B1 may belong to a wavelength band 1625 which is a portion of the first wavelength band 1615, a wavelength band 1623 which is a portion of the second wavelength band 1613, and a wavelength band 1621 which is a portion of the third wavelength band 1611, respectively. In FIG. 16, second multiple wavelength bands are indicated as R2, G2, and B2. R2, G2, and B2 may belong to at least a portion of a remainder 1635 excluding the first multiple wavelength bands from the first wavelength band 1615, at least a portion of a remainder 1633 excluding the first multiple wavelength bands from the second wavelength band 1613, and at least a portion of a remainder 1631 excluding the first multiple wavelength bands from the third wavelength band 1611, respectively. The first optical element 1530 and the second optical element 1540 of FIG. 15 may each include the multiband coating layer corresponding to the graph of FIG. 16. The multiband coating layer may have a transmittance close to 0% with respect to the first multiple wavelength bands R1, G1, and B1, and have a transmittance close to 100% with respect to the second multiple wavelength bands R2, G2, and B2.

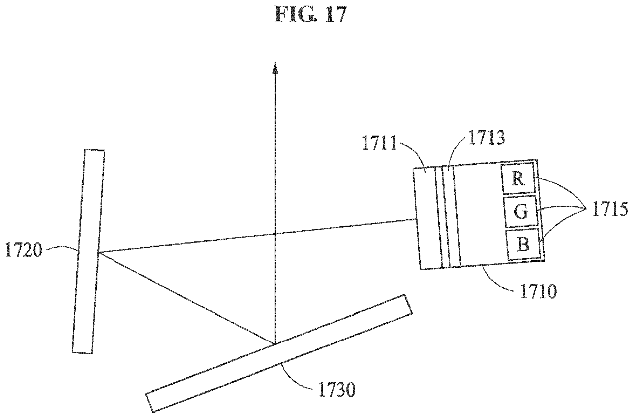

FIG. 17 illustrates a display device and mirrors according to an exemplary embodiment. Referring to FIG. 17, a display device 1710 may include a display panel 1711, a diffuser 1713, and a light source 1715. The display panel 1711 may display an HUD image. The display panel 1711 may include a liquid crystal display (LCD) panel, or a spatial light modulator (SLM) such as a digital light processor (DLP) or a liquid crystal on silicon (LCoS). In an example, the display panel 1711 and the light source 1715 may be combined, for example, as in an LED device. The light source 1715 may provide light of multiple wavelength bands to the display panel 1711, and may be an LED type or a laser type. In FIG. 17, red (R), green (G), and blue (B) are illustrated as examples of the light of the multiple wavelength bands. The display panel 1711 may use the light of the multiple wavelength bands provided from the light source 1715 as backlight.

The diffuser 1713 may be inserted between the display panel 1711 and the light source 1715 to secure a light uniformity. Mirrors 1720 and 1730 may reflect the light of the multiple wavelength bands provided by the light source 1715 toward an optical element of a windshield. One of the mirrors 1720 and 1730 may be an aspheric mirror, and the other one of the mirrors 1720 and 1730 may be a reflection mirror. The aspheric mirror may adjust a propagation path of light to correct a distortion of the HUD image or enlarge the HUD image. The reflection mirror may be a plane mirror, and may adjust a propagation path of light. FIG. 17 illustrates two mirrors, for example, the mirrors 1720 and 1730. However, exemplary embodiments are not limited thereto, and only one of the mirrors 1720 and 1730 may be used based on an angle between the display device 1710 and the windshield.

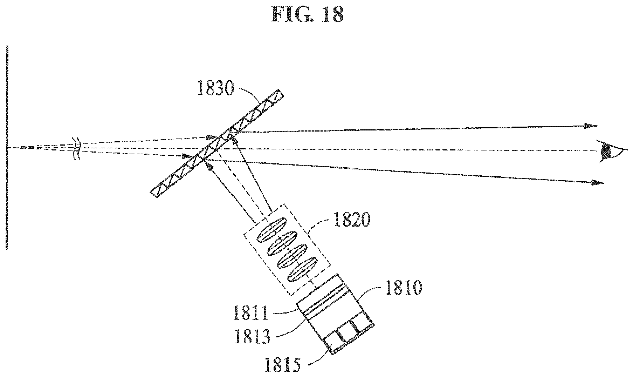

FIG. 18 illustrates an HUD system including a projection optical element according to an exemplary embodiment. FIG. 18 illustrates an example of using a projection optical element as an optical element, instead of a mirror. Referring to FIG. 18, a display device 1810 may include a display panel 1811, a diffuser 1813, and a light source 1815. Light of multiple wavelength bands provided by the light source 1815 may be provided to a projection optical element 1820 through the display panel 1811 and the diffuser 1813. The projection optical element 1820 may include at least one optical lens. The projection optical element 1820 may change propagation paths of light corresponding to the HUD image to correct a distortion of the HUD image or enlarge the HUD image. The light of the multiple wavelength bands passing through the projection optical element 1820 may be provided to an optical element 1830 including a Fresnel pattern.

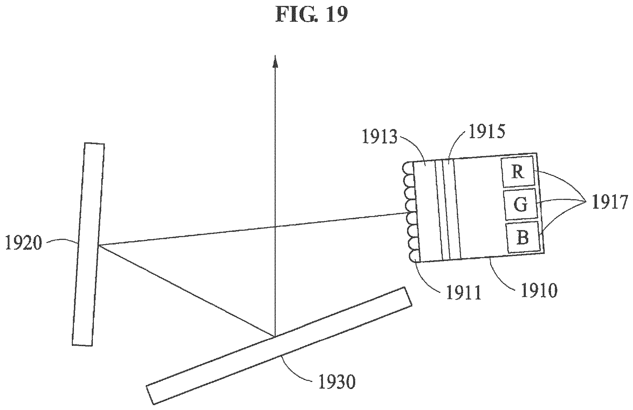

FIG. 19 illustrates an HUD system including a three-dimensional (3D) optical layer according to an exemplary embodiment. FIG. 19 illustrates an example of providing a 3D HUD image. Referring to FIG. 19, a display device 1910 may include a 3D optical layer 1911, a display panel 1913, a diffuser 1915, and a light source 1917. The 3D optical layer 1911 may be one of a parallax barrier, a lenticular lens, and a directional backlight unit, and convert an HUD image into a 3D image. FIG. 19 illustrates the 3D optical layer 1911 being on a front surface of the display panel 1913. When the 3D optical layer 1911 is a directional backlight unit, the 3D optical layer 1911 may be disposed on a rear surface of the display panel 1913 and substitute for the light source 1917. One of mirrors 1920 and 1930 may be an aspheric mirror, and the other one of the mirrors 1920 and 1930 may be a reflection mirror. FIG. 19 illustrates two mirrors, for example, the mirrors 1920 and 1930. However, exemplary embodiments are not limited thereto, and only one of the mirrors 1920 and 1930 may be used based on an angle between the display device 1910 and a windshield.

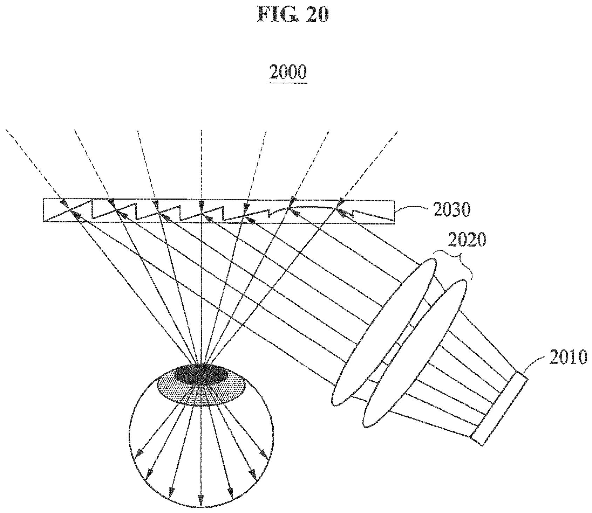

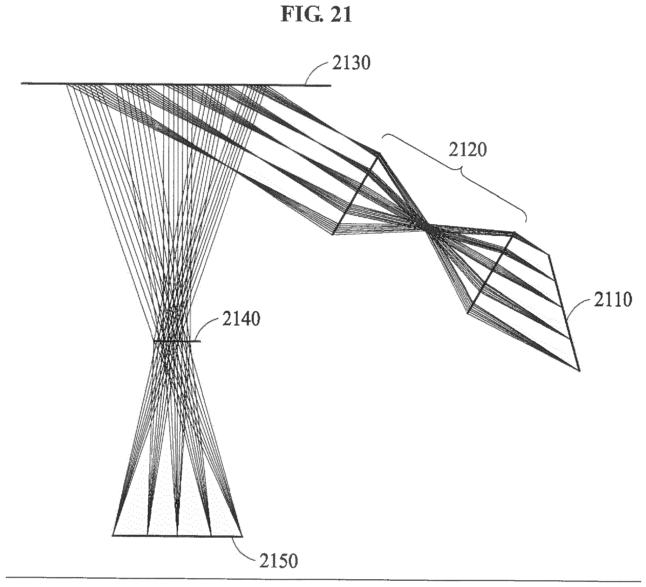

FIG. 20 illustrates an HUD system for eyeglasses according to an exemplary embodiment, and FIG. 21 illustrates paths of light related to an HUD system for eyeglasses according to an exemplary embodiment. FIGS. 20 and 21 illustrate an example of providing an HUD image through eyeglasses, rather than a windshield of a vehicle. The example of FIGS. 20 and 21 may be applied to smart eyeglasses. Referring to FIG. 20, an HUD system 2000 may include a display device 2010, optical lenses 2020, and an optical element 2030. The display device 2010 may be an SLM. The display device 2010 may provide light of multiple wavelength bands corresponding to an HUD image. The optical lenses 2020 may change paths of the light corresponding to the HUD image to correct a distortion of the HUD image or enlarge the HUD image. The optical element 2030 may include a Fresnel pattern layer, a multiband coating layer, and an immersion layer, and enlarge a virtual image of the HUD image. Thus, the HUD system 2000 may provide AR-level HUD information through a wide FOV. In FIG. 21, paths along which light of multiple wavelength bands provided by a display device 2110 reaching a retina 2150 through optical lenses 2120, an optical element 2130, and a pupil 2140 are illustrated.

The units described herein may be implemented using hardware components and software components. For example, the hardware components may include microphones, amplifiers, band-pass filters, audio to digital convertors, non-transitory computer memory and processing devices. A processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular, however, one skilled in the art will appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

The method according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

While one or more exemplary embodiments have been described with reference to the figures, it will be understood by those of ordinary skill in the art that various changes in form and details may be made therein without departing from the scope as defined by the following claims.

## Claims

1. An optical element (200) for a head up display (HUD), the optical element (200) comprising:
a Fresnel pattern layer (210) configured to enlarge a virtual image of an HUD image;
a multiband coating layer (220) formed on the Fresnel pattern layer (210), the multiband coating layer (220) configured to receive light (21) of multiple wavelength bands from a light source, and transmit a portion of the light (21) of the multiple wavelength bands based on a transmittance set with respect to each of the multiple wavelength bands; and
an immersion layer (230) formed on the multiband coating layer (220), a refractive index (n2) of the immersion layer (220) being equal to a refractive index (n1) of the Fresnel pattern layer (210),
wherein the Fresnel pattern layer (210) is based on a Fresnel pattern of a Fresnel lens (1000) comprising a first section (1010) including inclined surface parts of a first direction (D1) on a first side, a second section (1020) including inclined surface parts of a second direction (D2) on the first side and a third section (1030) around a central axis;
**the optical element (200) characterized in that**
the Fresnel pattern layer (210) comprises only the first section (1010) or the second section (1020) of the Fresnel lens (1000) based on an angle at which the HUD image is projected to a user, and
the multiband coating layer (220) is formed only on the inclined surface parts of one direction of the Fresnel pattern layer (210).

2. The optical element (200) of claim 1, wherein the multiple wavelength bands comprise a wavelength band corresponding to a red light, a wavelength band corresponding to a green light, and a wavelength band corresponding to a blue light.

3. The optical element (200) according to any of claims 1 or 2, wherein the transmittance is set with respect to each of the multiple wavelength bands such that a transmittance with respect to a white light is maintained at a predetermined level.

4. The optical element (200) according to any of claims 1 to 3, wherein the transmittance is set based on a visibility of the optical element (200) with respect to a windshield (140).

5. The optical element (200) according to any of claims 1 to 4, wherein the transmittance is set to be lower than a predetermined transmittance when a bandwidth of each wavelength band of the multiple wavelength bands is narrower than a predetermined bandwidth.

6. The optical element (200) according to any of claims 1 to 5, wherein the transmittance is set to a first transmittance when the light source is a light emitting diode (LED), and set to a second transmittance when the light source is a laser, and
the first transmittance is higher than the second transmittance.

7. The optical element (200) according to any of claims 1 to 6, wherein the optical element (200) is inserted into a windshield (140), or attached to the windshield (140) in a form of a film.

8. A head up display, HUD, system (100), comprising:
a light source (113) configured to emit light of first multiple wavelength bands for an HUD image;
a first optical element (120) configured to reflect the light of the first multiple wavelength bands; and
a second optical element (130) configured to reflect light of the first multiple wavelength bands reflected from the first optical element (120), the second optical element (130) comprising:
a Fresnel pattern layer (210) comprising at least one Fresnel lens with inclined surfaces;
a multiband coating layer (220) formed on the inclined surfaces of the at least one Fresnel lens, the multiband coating layer (220) configured to transmit a portion of light (21) of the first multiple wavelength bands set based on a transmittance with respect to each of the first multiple wavelength bands, and reflect a remaining portion of light (21) of the first multiple wavelength bands based on a reflectance set with respect to each of the first multiple wavelength bands; and
an immersion layer (230) formed on the multiband coating layer (220), a refractive index (n2) of the immersion layer (230) being equal to a refractive index (n1) of the Fresnel pattern layer (210),
wherein the Fresnel pattern layer (210) is based on a Fresnel pattern of a Fresnel lens (1000) comprising a first section (1010) including inclined surface parts of a first direction (D1) on a first side, a second section (1020) including inclined surface parts of a second direction (D2) on the first side and a third section (1030) around a central axis;
**the HUD system (100) characterized in that**
the Fresnel pattern layer (210) comprises only the first section (1010) or the second section (1020) of the Fresnel lens (1000) based on an angle at which the HUD image is projected to a user, and
the multiband coating layer (220) is formed only on the inclined surface parts of one direction of the Fresnel pattern layer (210).

9. The HUD system (100) of claim 8, wherein the second optical element (130) is configured to:
reflect light of the first multiple wavelength bands provided from an external light source outside of a vehicle based on the set reflectance; and
transmit light of the second multiple wavelength bands provided from the external light source.

10. The HUD system (100) of claim 9, wherein the first multiple wavelength bands comprise a portion of a first wavelength band corresponding to a red light, a portion of a second wavelength band corresponding to a green light, and a portion of a third wavelength band corresponding to a blue light, and
the second multiple wavelength bands comprise at least a portion of a remainder excluding the first multiple wavelength bands from the first wavelength band, at least a portion of a remainder excluding the first multiple wavelength bands from the second wavelength band, and at least a portion of a remainder excluding the first multiple wavelength bands from the third wavelength band.

11. The HUD system (100) according to any of claims 9 and 10, wherein the second optical element (130) is inserted into a windshield (140), and
wherein the reflectance is set based on a reflectance of the first multiple wavelength bands of the windshield (140) to maintain a visibility of the second optical element (130) at a predetermined level.

12. The HUD system (100) according to any of claims 9 to 11, wherein a size of a pitch of the Fresnel lens layer (210) is less than an eye power of a user.

## Patentansprüche

1. Ein optisches Element (200) für ein Head-up-Display (HUD), das optische Element (200) umfassend:
eine Fresnel-Musterschicht (210), derart konfiguriert, dass sie ein virtuelles Bild eines HUD-Bildes vergrößert;
eine Multiband-Beschichtungsschicht (220), die auf der Fresnel-Musterschicht (210) ausgebildet ist, die Multiband-Beschichtungsschicht (220) derart konfiguriert, dass sie Licht (21) mehrerer Wellenlängenbänder von einer Lichtquelle empfängt und einen Teil des Lichts (21) der mehreren Wellenlängenbänder auf Grundlage eines Durchlässigkeitsgrads durchlässt, der in Bezug auf jedes der mehreren Wellenlängenbänder eingestellt ist; und
eine Immersionsschicht (230), die auf der Multiband-Beschichtungsschicht (220) ausgebildet ist, wobei ein Brechungsindex (n2) der Immersionsschicht (220) gleich einem Brechungsindex (n1) der Fresnel-Musterschicht (210) ist,
wobei die Fresnel-Musterschicht (210) auf einem Fresnel-Muster einer Fresnel-Linse (1000) basiert, die einen ersten Abschnitt (1010) mit geneigten Oberflächenteilen einer ersten Richtung (D1) auf einer ersten Seite, einen zweiten Abschnitt (1020) mit geneigten Oberflächenteilen einer zweiten Richtung (D2) auf der ersten Seite und einen dritten Abschnitt (1030) um eine zentrale Achse herum umfasst;
**das optische Element (200), dadurch gekennzeichnet, dass**
die Fresnel-Musterschicht (210) nur den ersten Abschnitt (1010) oder den zweiten Abschnitt (1020) der Fresnel-Linse (1000) umfasst, basierend auf einem Winkel, unter dem das HUD-Bild zu einem Benutzer projiziert wird, und
die Multiband-Beschichtungsschicht (220) nur auf den geneigten Oberflächenteilen einer Richtung der Fresnel-Musterschicht (210) ausgebildet ist.

2. Das optische Element (200) nach Anspruch 1, wobei die mehreren Wellenlängenbänder ein Wellenlängenband, das rotem Licht entspricht, ein Wellenlängenband, das grünem Licht entspricht, und ein Wellenlängenband, das blauem Licht entspricht, umfassen.

3. Das optische Element (200) nach einem der Ansprüche 1 oder 2, wobei der Durchlässigkeitsgrad in Bezug auf jedes der mehreren Wellenlängenbänder so eingestellt ist, dass ein Durchlässigkeitsgrad in Bezug auf ein weißes Licht auf einem vorbestimmten Niveau gehalten wird.

4. Das optische Element (200) nach einem der Ansprüche 1 bis 3, wobei der Durchlässigkeitsgrad auf Grundlage einer Sichtbarkeit des optischen Elements (200) in Bezug auf eine Windschutzscheibe (140) eingestellt wird.

5. Das optische Element (200) nach einem der Ansprüche 1 bis 4, wobei der Durchlässigkeitsgrad so eingestellt ist, dass er niedriger als ein vorbestimmter Durchlässigkeitsgrad ist, wenn eine Bandbreite jedes Wellenlängenbandes der mehreren Wellenlängenbänder schmaler als eine vorbestimmte Bandbreite ist.

6. Das optische Element (200) nach einem der Ansprüche 1 bis 5, wobei der Durchlässigkeitsgrad auf einen ersten Durchlässigkeitsgrad eingestellt ist, wenn die Lichtquelle eine lichtemittierende Diode (LED) ist, und auf einen zweiten Durchlässigkeitsgrad eingestellt ist, wenn die Lichtquelle ein Laser ist, und
der erste Durchlässigkeitsgrad höher ist als der zweite Durchlässigkeitsgrad.

7. Das optische Element (200) nach einem der Ansprüche 1 bis 6, wobei das optische Element (200) in eine Windschutzscheibe (140) eingesetzt oder in Form einer Folie an der Windschutzscheibe (140) befestigt ist.

8. Ein Head-up-Display, HUD, System (100), umfassend:
eine Lichtquelle (113), derart konfiguriert, dass sie Licht aus ersten mehreren Wellenlängenbändern für ein HUD-Bild emittiert;
ein erstes optisches Element (120), derart konfiguriert, dass es das Licht der ersten mehreren Wellenlängenbänder reflektiert; und
ein zweites optisches Element (130), derart konfiguriert, dass es Licht der ersten mehreren Wellenlängenbänder reflektiert, das von dem ersten optischen Element (120) reflektiert wurde, wobei das zweite optische Element (130) umfasst:
eine Fresnel-Musterschicht (210), die mindestens eine Fresnel-Linse mit geneigten Oberflächen umfasst;
eine Multiband-Beschichtungsschicht (220), die auf den geneigten Oberflächen der mindestens einen Fresnel-Linse ausgebildet ist, die Multiband-Beschichtungsschicht (220) derart konfiguriert, dass sie einen Teil des Lichts (21) der ersten mehreren Wellenlängenbänder durchlässt, der auf Grundlage eines Durchlässigkeitsgrads in Bezug auf jedes der ersten mehreren Wellenlängenbänder eingestellt ist, und einen verbleibenden Teil des Lichts (21) der ersten mehreren Wellenlängenbänder auf Grundlage eines Reflexionsgrads reflektiert, der in Bezug auf jedes der ersten mehreren Wellenlängenbänder eingestellt ist; und
eine Immersionsschicht (230), die auf der Multiband-Beschichtungsschicht (220) ausgebildet ist, wobei ein Brechungsindex (n2) der Immersionsschicht (230) gleich einem Brechungsindex (n1) der Fresnel-Musterschicht (210) ist,
wobei die Fresnel-Musterschicht (210) auf einem Fresnel-Muster einer Fresnel-Linse (1000) basiert, die einen ersten Abschnitt (1010) mit geneigten Oberflächenteilen einer ersten Richtung (D1) auf einer ersten Seite, einen zweiten Abschnitt (1020) mit geneigten Oberflächenteilen einer zweiten Richtung (D2) auf der ersten Seite und einen dritten Abschnitt (1030) um eine zentrale Achse herum umfasst;
**das HUD-System (100) dadurch gekennzeichnet, dass**
die Fresnel-Musterschicht (210) nur den ersten Abschnitt (1010) oder den zweiten Abschnitt (1020) der Fresnel-Linse (1000) umfasst, basierend auf einem Winkel, unter dem das HUD-Bild zu einem Benutzer projiziert wird, und
die Multiband-Beschichtungsschicht (220) nur auf den geneigten Oberflächenteilen einer Richtung der Fresnel-Musterschicht (210) ausgebildet ist.

9. Das HUD-System (100) nach Anspruch 8, wobei das zweite optische Element (130) konfiguriert ist, um:
Licht der ersten mehreren Wellenlängenbänder, das von einer externen Lichtquelle außerhalb eines Fahrzeugs bereitgestellt wird, basierend auf dem eingestellten Reflexionsgrad zu reflektieren; und
Licht der zweiten mehreren Wellenlängenbänder zu übertragen, das von der externen Lichtquelle bereitgestellt wird.

10. Das HUD-System (100) nach Anspruch 9, wobei die ersten mehreren Wellenlängenbänder einen Teil eines ersten Wellenlängenbandes, das einem roten Licht entspricht, einen Teil eines zweiten Wellenlängenbandes, das einem grünen Licht entspricht, und einen Teil eines dritten Wellenlängenbandes, das einem blauen Licht entspricht, umfassen, und
die zweiten mehreren Wellenlängenbänder mindestens einen Teil eines Restes, der die ersten mehreren Wellenlängenbänder aus dem ersten Wellenlängenband ausschließt, mindestens einen Teil eines Restes, der die ersten mehreren Wellenlängenbänder aus dem zweiten Wellenlängenband ausschließt, und mindestens einen Teil eines Restes, der die ersten mehreren Wellenlängenbänder aus dem dritten Wellenlängenband ausschließt, umfassen.

11. Das HUD-System (100) nach einem der Ansprüche 9 und 10, wobei das zweite optische Element (130) in eine Windschutzscheibe (140) eingesetzt ist, und
wobei der Reflexionsgrad auf Grundlage eines Reflexionsgrads der ersten mehreren Wellenlängenbänder der Windschutzscheibe (140) eingestellt wird, um eine Sichtbarkeit des zweiten optischen Elements (130) auf einem vorbestimmten Niveau zu halten.

12. Das HUD-System (100) nach einem der Ansprüche 9 bis 11, wobei die Größe des Abstandes der Fresnel-Linsenschicht (210) kleiner ist als die Sehstärke eines Benutzers.

## Revendications

1. Élément optique (200) pour un affichage tête haute, HUD (Head Up Display), l'élément optique (200) comprenant :
une couche de motif de Fresnel (210) configurée pour agrandir une image virtuelle d'une image HUD ;
une couche de revêtement multibande (220) formée sur la couche de motif de Fresnel (210), la couche de revêtement multibande (220) configurée pour recevoir une lumière (21) de plusieurs bandes de longueur d'onde issue d'une source lumineuse, et transmettre une partie de la lumière (21) des plusieurs bandes de longueur d'onde selon une transmittance définie par rapport à chacune des plusieurs bandes de longueur d'onde ; et
une couche d'immersion (230) formée sur la couche de revêtement multibande (220), un indice de réfraction (n2) de la couche d'immersion (220) étant égal à un indice de réfraction (n1) de la couche de motif de Fresnel (210),
dans lequel la couche de motif de Fresnel (210) repose sur un motif de Fresnel d'une lentille de Fresnel (1000) comprenant une première section (1010) incluant des parties de surface inclinées d'une première direction (D1) sur un premier côté, une deuxième section (1020) incluant des parties de surface inclinées d'une deuxième direction (D2) sur le premier côté et une troisième section (1030) autour d'un axe central ;
**l'élément optique (200) caractérisé en ce que**
la couche de motif de Fresnel (210) comprend uniquement la première section (1010) ou la deuxième section (1020) de la lentille de Fresnel (1000) selon un angle auquel l'image HUD est projetée vers un utilisateur, et
la couche de revêtement multibande (220) est formée uniquement sur les parties de surface inclinées d'une direction de la couche de revêtement de Fresnel (210).

2. L'élément optique (200) de la revendication 1, dans lequel les plusieurs bandes de longueur d'onde comprennent une bande de longueur d'onde correspondant à une lumière rouge, une bande de longueur d'onde correspondant à une lumière verte et une bande de longueur d'onde correspondant à une lumière bleue.

3. L'élément optique (200) selon l'une quelconque de la revendication 1 ∘ 2, dans lequel la transmittance est définie par rapport à chacune des plusieurs bandes de longueur d'onde de sorte qu'une transmittance par rapport à une lumière blanche soit maintenue à un niveau prédéterminé.

4. L'élément optique (200) selon l'une quelconque des revendications 1 à 3, dans lequel la transmittance est définie selon une visibilité de l'élément optique (200) par rapport à un pare-brise (140).

5. L'élément optique (200) selon l'une quelconque des revendications 1 à 4, dans lequel la transmittance est définie pour être inférieure à une transmittance prédéterminée lorsqu'une largeur de bande de chaque bande de longueur d'onde des plusieurs bandes de longueur d'onde est plus étroite qu'une largeur de bande prédéterminée.

6. L'élément optique (200) selon l'une quelconque des revendications 1 à 5, dans lequel la transmittance est définie sur une première transmittance lorsque la source lumineuse est une diode électroluminescente (DEL), et définie sur une deuxième transmittance lorsque la source lumineuse est un laser, et
la première transmittance est supérieure à la deuxième transmittance.

7. L'élément optique (200) selon l'une quelconque des revendications 1 à 6, dans lequel l'élément optique (200) est inséré dans un pare-brise (140), ou fixé au pare-brise (140) sous la forme d'un film.

8. Système d'affichage tête haute, HUD (Head Up Display), (100) comprenant :
une source lumineuse (113) configurée pour émettre une lumière de premières plusieurs bandes de longueur d'onde pour une image HUD ;
un premier élément optique (120) configuré pour refléter la lumière des premières plusieurs bandes de longueur d'onde ; et
un deuxième élément optique (130) configuré pour refléter une lumière des premières plusieurs bandes de longueur d'onde reflétée depuis le premier élément optique (120), le deuxième élément optique (130) comprenant :
une couche de motif de Fresnel (210) comprenant au moins une lentille de Fresnel avec des surfaces inclinées ;
une couche de revêtement multibande (220) formée sur les surfaces inclinées de l'au moins une lentille de Fresnel, la couche de revêtement multibande (220) configurée pour transmettre une partie de lumière (21) des premières bandes de longueur d'onde définie selon une transmittance par rapport à chacune des premières plusieurs bandes de longueur d'onde, et refléter une partie restante de lumière (21) des premières plusieurs bandes de longueur d'onde selon une réflectance définie par rapport à chacune des premières plusieurs bandes de longueur d'onde ; et
une couche d'immersion (230) formée sur la couche de revêtement multibande (220), un indice de réfraction (n2) de la couche d'immersion (220) étant égal à un indice de réfraction (n1) de la couche de motif de Fresnel (210),
dans lequel la couche de motif de Fresnel (210) repose sur un motif de Fresnel d'une lentille de Fresnel (1000) comprenant une première section (1010) incluant des parties de surface inclinées d'une première direction (D1) sur un premier côté, une deuxième section (1020) incluant des parties de surface inclinées d'une deuxième direction (D2) sur le premier côté et une troisième section (1030) autour d'un axe central ;
**le système HUD (100) caractérisé en ce que**
la couche de motif de Fresnel (210) comprend uniquement la première section (1010) ou la deuxième section (1020) de la lentille de Fresnel (1000) selon un angle auquel l'image HUD est projetée vers un utilisateur, et
la couche de revêtement multibande (220) est formée uniquement sur les parties de surface inclinées d'une direction de la couche de revêtement de Fresnel (210).

9. Le système HUD (100) de la revendication 8, dans lequel le deuxième élément optique (130) est configuré pour :
refléter une lumière des premières plusieurs bandes de longueur d'onde fournie à partir d'une source lumineuse extérieure d'un véhicule selon la réflectance définie ; et
transmettre une lumière des deuxièmes plusieurs bandes de longueur d'onde fournie à partir de la source lumineuse extérieure.

10. Le système HUD (100) de la revendication 9, dans lequel les premières plusieurs bandes de longueur d'onde comprennent une partie d'une première bande de longueur d'onde correspondant à une lumière rouge, une partie d'une deuxième bande de longueur d'onde correspondant à une lumière verte et une partie d'une troisième bande de longueur d'onde correspondant à une lumière bleue, et
les deuxièmes plusieurs bandes de longueur d'onde comprennent au moins une partie d'un restant excluant les premières plusieurs bandes de longueur d'onde de la première bande de longueur d'onde, au moins une partie d'un restant excluant les premières plusieurs bandes de longueur d'onde de la deuxième bande de longueur d'onde, et au moins une partie d'un restant excluant les premières plusieurs bandes de longueur d'onde de la troisième bande de longueur d'onde.

11. Le système HUD (100) selon l'une quelconque des revendications 9 et 10, dans lequel le deuxième élément optique (130) est inséré dans un pare-brise (140), et
dans lequel la réflectance est définie selon une réflectance des premières plusieurs bandes de longueur d'onde du pare-brise (140) pour maintenir une visibilité du deuxième élément optique (130) à un niveau prédéterminé.

12. Le système HUD (100) selon l'une quelconque des revendications 9 à 11, dans lequel une taille d'un pas de la couche de lentille de Fresnel (210) est inférieure à une force oculaire d'un utilisateur.
